# EUROPEAN PATENT APPLICATION

(11) **EP 4 761 334 A1**
(43) Date of publication of application: **17.06.2026**
(21) Application number: 24219532.9
(22) Date of filing: 12.12.2024
(51) Int. Cl.: H04W 24/06, H04L 41/5009, H04L 41/5067, H04L 43/0805, H04W 48/18

(54) **USER EQUIPMENT, CELLULAR HOME NETWORK, ACCESS NETWORK, AND COMMUNICATION SYSTEM FOR TESTING AVAILABILITY OF END-TO-END (E2E) SERVICES**

(71) Applicant: Deutsche Telekom AG, 53113 Bonn (DE)
(72) Inventor: BERGER, Karl, 1210 Wien (AT); LAUSTER, Reinhard, 3100 St. Pölten (AT)
(74) Representative: 2SPL Patentanwälte PartG mbB

(57) **Abstract**

Provided is a user equipment, UE. The UE includes processing circuitry configured to gather data about at least one end-to-end, E2E, service and a procedure to verify availability of the E2E service via an access network. The processing circuitry is further configured to attach to a wireless network. The processing circuitry is further configured to execute the procedure to verify availability of the at least one E2E service via the attached wireless network as the access network.

## Description

### Field

The present disclosure relates to user equipment, a cellular home network, an access network, a communication system, and methods.

### Background

In current network landscapes and eco-systems, the home operator and its subscribers may be challenged by a high number of access and core network types with different capabilities. The services where the end-user has subscriptions and is provided and guaranteed by their home operator might not be available in every access network. For example, in case of roaming and intermediate networks currently used concept is based on SLAs (service level agreements) between the involved network operators.

### Summary

The present disclosure pertains in general to a mechanism to trigger a UE to imitate an E2E service verification procedure to validate an E2E service in a currently connected network. The present disclosure is based on the finding that combinations of access networks and services are increasing, and the user may expect that these services be established in a proper way.

According to a first aspect, the present disclosure provides a UE. The UE comprises processing circuitry configured to gather data about at least one end-to-end, E2E, service and a procedure to verify availability of the E2E service via an access network. The processing circuitry is further configured to attach to a wireless network. The processing circuitry is further configured to execute the procedure to verify availability of the at least one E2E service via the attached wireless network as the access network.

Thereby, the UE may connect to a network although the network does not provide all required (or usual) services for the UE.

In some examples, the processing circuitry is further configured to send a procedure specific test signal to the attached wireless network for verifying the availability of the at least one E2E service via the attached wireless network.

Thereby, availability of the E2E service may be verified.

In some examples, if the at least one E2E service is not available, the processing circuitry is further configured to gather data about at least one alternative E2E service. The processing circuitry may be further configured to execute a procedure to verify the availability of the at least one alternative E2E service via the attached wireless network.

Thereby, similar effects as described with relation to other aspects and examples may be achieved.

In some examples, if the at least one alternative E2E service is available, the processing circuitry is further configured to generate a signal to acquire a user input to register the UE for the at least one alternative E2E service at the attached wireless network.

Thereby, service may be further enhanced.

In some examples, the data comprises an indication of whether the at least one E2E service is a mandatory or an optional E2E services.

Thereby, services may be prioritized and a connection to the access network may be possible.

In some examples, the processing circuitry is further configured to execute a plurality of respective procedures to verify availability of a plurality of respective E2E service via the attached wireless network as the access network.

Thereby, similar effects as described with relation to other aspects and examples may be achieved.

In some examples, if only a part of the plurality of E2E services is available via the attached wireless network, the processing circuitry is further configured to perform a partial E2E service registration via the attached wireless network.

Thereby, successful registration may be achieved.

In some examples, the gathering of the data comprises at least one of receiving the data from a home network, or reading the data from at least one of a storage of the UE and a storage coupled with the UE.

Thereby, similar effects as described with relation to other aspects and examples may be achieved.

In some examples, if at least two possible wireless networks are available as access networks, the processing circuitry is further configured to attach to the at least two possible networks. The processing circuitry may be further configured to execute the procedure at the at least two possible networks. The processing circuitry may be further configured to execute a predetermined action based on a result of the test procedures.

Thereby, the best possible network may be selected. Furthermore, based on one or more databases, a home network/operator and/or the UE may optimize future network search in aspect of power consumption and selection, if the results are stored in the respective database(s), such that it might not be necessary to carry out a search every time the UE (or a different UE) arrives in the service area of the access network. On the other hand, an E2E service may selected that might not fulfill requirements of the UE and/or home network/operator. For example, a service may be selected as a pure OTT service.

In some examples, the processing circuitry is further configured to determine quality of the E2E service via the access network.

Thereby, a ranking or a preference of the access network over another access network may be established based on the quality.

According to a second aspect, the disclosure provides a cellular home network. The cellular home network comprises processing circuitry configured to maintain a database comprising data indicating, for at least one access network, whether at least one E2E service is available via the at least one access network. The processing circuitry is further configured to update the database based on a signal, by a UE. The signal indicates a current availability of the E2E service via a wireless network as an access network.

Thereby, faster service registration may be enabled.

In some examples, the database further comprises data indicating a procedure, for the UE, to verify availability of the at least one E2E service via the wireless network.

Thereby, similar effects as described with relation to other aspects and examples may be achieved.

In some examples, the database further comprises data indicating, if the E2E service is available via the at least one access network, a quality of the at least one E2E service.

Thereby, similar effects as described with relation to other aspects and examples may be achieved.

According to a third aspect, the disclosure provides an access network comprising processing circuitry configured to receive, from a user equipment, UE, a procedure specific test signal for verifying, to the UE, availability of an E2E service via the access network.

Thereby, similar effects as described with relation to other aspects and examples may be achieved.

According to a fourth aspect, the disclosure provides a communication system comprising a UE according to the first aspect (or to any example relating to the first aspect), a wireless home network according to the second aspect (or to any example relating to the second aspect), and an access network according to the third aspect.

According to a fifth aspect, the disclosure provides a method for a UE. The method comprises gathering data about an end-to-end, E2E, service and a procedure to verify availability of the E2E service via an access network. The method further comprises attaching to a wireless network. The method further comprises executing the procedure to verify availability of the E2E service via the attached wireless network as the access network.

Thereby, similar effects as described with relation to other aspects and examples may be achieved.

According to a sixth aspect, the disclosure provides a method for a wireless home network. The method comprises receiving, from a UE located in an access network different from the home network, a request for data indicating at least one E2E service for the UE to be provided via the access network. The method further comprises transmitting, to the UE, the data indicating the at least one E2E service and a procedure to verify availability of the at least one E2E service via the access network.

Thereby, similar effects as described with relation to other aspects and examples may be achieved.

According to a seventh aspect, the disclosure provides a method for an access network. The method comprises receiving, from a UE, a procedure specific test signal for verifying, to the UE, availability of an E2E service via the access network.

Thereby, similar effects as described with relation to other aspects and examples may be achieved.

According to an eighth aspect, the disclosure provides a computer program comprising instructions which, when the computer program is carried out on a computer, causes the computer to carry out any one of the methods described herein, such as the method according to the fifth aspect, the sixth aspect, or the seventh aspect.

Thereby, similar effects as described with relation to other aspects and examples may be achieved.

According to a ninth aspect, the disclosure provides a non-transitory machine-readable medium comprising machine-readable instructions which, when executed on a processor, cause the processor to carry out any one of the method described herein, such as the method according to the fifth aspect, the sixth aspect, or the seventh aspect.

### Brief description of the Figures

Some examples of apparatuses and/or methods will be described in the following by way of example only, and with reference to the accompanying figures, in which
Fig. 1 depicts an access network according to the present disclosure;
Fig. 2 depicts a method for a UE according to the present disclosure;
Fig. 3 depicts a method for a home network according to the present disclosure;
Fig. 4 depicts a method for an access network according to the present disclosure; and
Fig. 5 depicts a sequence diagram of a method according to the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

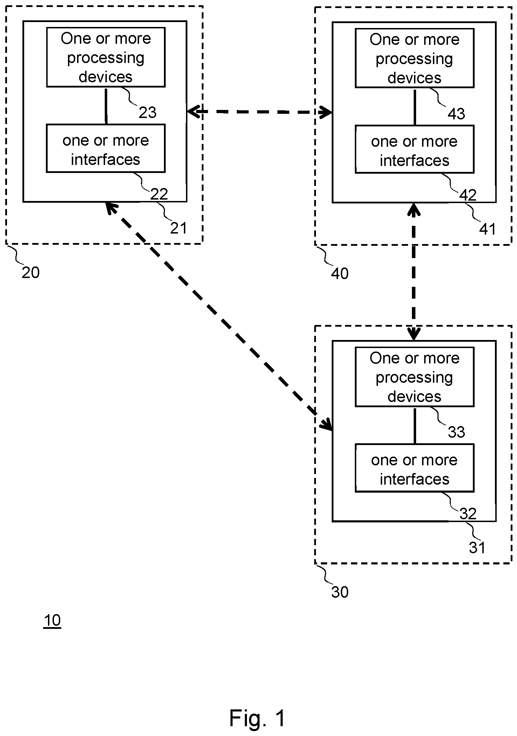

Fig. 1 shows a block diagram of a mobile communications system/network 10 including examples of a base station 20, a UE 30, and a repeater 40, thereby constituting by an active distributed antenna system (aDAS), in some embodiments. In this example, the communication network is an access network, as will be discussed further below, but a similar description may apply to a home network according to the present disclosure with the exception that the UE 30 might not be located in the home network when the principles of the present disclosure are carried out, but in the access network.

The base station 20 of the mobile communication system 10 includes circuitry 21 including one or more interfaces 22, which are configured to communicate in the mobile communication system 10. The one or more interfaces 22 are coupled to one or more processing devices 23, which are configured to carry out the (network-side) principles of the present disclosure. However, the present disclosure is not limited to the base station carrying out these principles, as the repeater 40 may also carry out at least a part thereof.

The UE 30 of the mobile communication system 10 includes circuitry 31 including one or more interfaces 32, which are configured to communicate in the mobile communication system 10. The one or more interfaces 32 are coupled to one or more processing devices 33, which are configured to carry out the (UE-side) principle of the present disclosure.

The repeater 40 of the mobile communication system 10 includes circuitry 41 including one or more interfaces 42, which are configured to communicate in the mobile communication system 10. The one or more interfaces 42 are coupled to one or more processing devices 43, which are configured to connect the base station 20 with the UE 30. It should be noted that the present disclosure is not limited to the case that the connection is established via a repeater and the principles discussed herein can equally be applied when the connection is established directly between the base station 20 and the UE 30.

As illustrated in Fig. 1, the respective one or more processing devices 23, 33, and 43 are coupled to the respective one or more interfaces 22, 32, and 42. The one or more interfaces 22, 32, and 42 may correspond to one or more inputs and/or outputs for receiving and/or transmitting information, which may be in digital (bit) values according to a specified code or protocol, within a module, between modules or between modules of different entities. For example, an interface 22, 32, and/or 42 may comprise interface circuitry configured to receive and/or transmit information/data. In examples, an interface 22, 32, 42 may correspond to any means for obtaining, receiving, transmitting or providing analog or digital signals or information, e.g., any connector, contact, pin, register, input port, output port, conductor, lane, etc., which allows providing or obtaining a signal or information. An interface 22, 32, 42 may be configured to communicate (transmit, receive, or both) in a wireless or wireline manner and it may be configured to communicate, i.e., transmit and/or receive signals, information with further internal or external components. The one or more interfaces 22, 32, 42 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 23, 33, 43 may be implemented using one or more processing units, one or more circuitries, any means for processing, such as a processor, a computer or a programmable hardware component being operable with accordingly adapted software. In other words, the described function of the one or more processing devices 23, 33, 43 may as well be implemented in software, which is then executed on one or more programmable hardware components. Such hardware components may comprise a general-purpose processor, a Digital Signal Processor (DSP), a micro-controller, etc.

In examples, measurements may be carried out by UEs, mobile terminals, or communication devices, which may communicate in the mobile communication system with the network entity, e.g., one or more cells generated by the base station 20 and/or the repeater 40. For example, the communication device and the network entity may communicate in/via a mobile communication system. The mobile communication system may comprise a plurality of transmission points and/or base stations operable to communicate radio signals with the communication device. In an example, the mobile communication system may comprise the communication device and the network entity.

A network entity, e.g., the network entity 20 or 40, can be located in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity or a base station may correspond to, a NodeB, an eNodeB, a gNodeB, a BTS (Base Transceiver Station), an access point, etc.

The mobile communication system 10 may be cellular and wireless. The term cell may refer to a coverage area of radio services provided by a transmission point, a remote unit, a remote head, a remote radio head, communication device, network entity or a NodeB, an eNodeB, a gNodeB, respectively. The terms cell and base station may be used synonymously, a base station may generate multiple cells. A wireless communication device, e.g., the communication device, can be registered or associated with at least one cell (e.g., the network entity), e.g., it can be associated to a cell such that data can be exchanged between the network and the mobile in the coverage area of the associated cell using a dedicated channel, connection or link.

In general, the communication device is a device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device, e.g., the UE 30, may be a mobile phone, such as a smartphone, or another type of mobile communication device, such as a smartwatch, a laptop computer, a tablet computer, or autonomous augmented-reality glasses. For example, the communication device and the network entity may be configured to communicate in a (cellular) mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz).

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, or any other (future) access technology which may be used for E2E services.

As indicated above, the UE 30 comprises processing circuitry 33. The processing circuitry 33 is configured to gather data about at least one end-to-end (E2E) service and a procedure to verify availability of the E2E service via an access network.

An E2E service may refer to a (complete) delivery of a communication or data service from a source to a destination, encompassing all intermediate components and processes. It may ensure seamless functionality across diverse network segments, including access, core, and edge networks. E2E services may prioritize certain features (such as quality of service (QoS), reliability, and security) to meet user-specific or application-specific requirements. An E2E service may involve coordination across multiple layers of a network stack, including physical, transport, and application layers. In other words, the concept of an E2E service may emphasize a holistic approach to service delivery, transcending individual network elements to guarantee optimal performance.

For example, an E2E service may include voice over LTE (VoLTE), voice over 5G (vo5G), voice over new radio (voNR), video or audio streaming, internet of things (IoT) device connectivity, (enterprise) virtual private network (VPN), cloud gaming, remote health monitoring, mobile broadband, smart city infrastructure, 5G network slicing (e.g., for industry), augmented or virtual reality services, or the like. The E2E services may additionally or alternatively include 3GPP/GSMA communication services (CS (circuit-switched) voice, IMS (IP multimedia subsystem), emergency calls, SMS (short message service), MMS (multimedia message service), VMS (voicemail service), RCS (rich communication service) messaging, or the like), 3GPP data services (e.g., sessions with specific IP version (IPv4/6), APNs/DNNs (access point name/data network name) and QoS (quality of service) requirements), loT (internet of things) services (e.g. non-IP data sessions), OTT (over-the-top) applications (e.g. MS Teams, TV, Video Conferencing, Mission critical, Health), home operator service applications (e.g. OTA (over-the-air)), UE vendor service applications, or the like.

The E2E service may be provided in accordance with an SLA (service level agreement) between the user and the home network operator. Thus, the procedure for verifying availability of the E2E service may correspond to an SLA verification procedure on the UE.

As indicated above, the network 10 may not be a home network of the UE 30, but an access network (such as a roaming network) and thus, the UE 30 might have no data about which E2E services are available via the access network 10. A home network may refer to a primary network operated by the user's mobile service provider, where the user's subscription and authentication details are registered. The home network may manage billing, service provision, and seamless connectivity for users within its coverage area. On the other hand, a roaming network or access network may refer to a foreign network that provides connectivity to a user when they are outside their home network's coverage area. Through agreements between operators, the roaming network may allow the user to access services like calls, SMS, and data while maintaining communication with the home network, e.g., for authentication and billing.

There may be various ways on how the data are gathered. For example, the home network may store the data in a database and provide (push) the data to the UE 30 (e.g., via the network 10), or the UE 30 may read the service from a storage of the UE 30 (or a storage that is coupled to the UE 30, such as a SIM (subscriber identity module).

The data may indicate at least one E2E service for the UE 30 and a procedure to verify availability of the E2E service via the access network 10, i.e., whether the access network 10 provides the E2E service. The procedure may be based on an (active) request from the UE 30 to the base station 20, or it may be based on a (passive) reception of data indicating availability of the E2E service. For example, the processing circuitry 33 may be configured to send a procedure specific test signal to the access network 10 to verify the availability. It should be understood that "verifying" may include the positive determination that the E2E service is available, but also the negative determination that it is not available.

The processing circuitry 33 is further configured to attach (the UE 30) to a wireless network. In this case, the wireless network is the access network 10, but there may be a case that multiple possible wireless networks are available. Furthermore, at the moment of the attaching, the network 10 might has not become the access network yet. In other words, when the UE 30 attaches to the network 10, it may depend on how many and which E2E services are available via the network 10 such that the network 10 becomes the access network. Therefore, the access network is at this point only a hypothetical access network for the UE 30, and viewed from the UE 30, it might be one of multiple wireless networks that might be used for the at least one E2E service.

Attaching may refer to establishing a connection with the network 10 to determine which E2E service is available. This may involve sending authentication information to the network 10, which may validate the user's subscription and configure the connection for communication, such as calls, SMS, and data usage.

The processing circuitry 33 is further configured to execute the procedure to verify availability of the at least one E2E service via the attached wireless network as the access network.

While in former approaches, the UE would not have connected to the network, if the E2E is not available, according to the present disclosure, the UE 30 may still be configured to connect to the network 10, for example, if an alternative E2E service is available or if the E2E service is set as not mandatory. Even in cases, the E2E service is set as mandatory, the UE 30 might connect to the network 10 to use other services, instead of not connecting at all. For example, 3GPP communication services are required by the home network provider and they are not available at the network 10, but 3GPP data services are available, this might be sufficient for the UE 30 to choose the network 10 as the access network.

Thus, in some examples, if the at least one E2E service is not available, the processing circuitry is further configured to gather data about at least one alternative E2E service. In such examples, the processing circuitry may be further configured to execute a procedure to verify the availability of the at least one alternative E2E service via the attached wireless network.

The alternative procedure may be based on a similar approach as the procedure for the non-alternative service (e.g., a test signal), or it may be different.

In other words, in former approaches, a voice centric device might not select a network not providing native voice support, such as CS, VoLTE, VoNR. Thus, a pure data network like 5G SA (standalone) might not be used if VoNR is not supported (e.g., in case data networks do not explicitly support native VoLTE and VoNR).

However, according to the present disclosure, at least one of the UE 30, the network operator and the service provider(s) may define at least one of minimum services, recommended services, and exceptions to accept under special conditions or after confirming them (e.g., by the user or UE or by the provider/operator).

For example, if an area is only covered 5G SA without native VoNR support for the UE, e.g., the user (or operator or provider) may overrule to connect to the network. In such a case, the services may use OTT (over-the-top service) but without native network support.

The user may be informed of possible limitations which may decrease or disable some services, such as no emergency call or no public warning system, or the like. On the other hand, the network operator may limit or overrule customer preferences, if necessary.

In other words, if the at least one alternative E2E service is available, the processing circuitry is further configured to generate a signal to acquire a user input to register the UE for the at least one alternative E2E service at the attached wireless network.

In some examples, the data comprises an indication of whether the at least one of E2E service is a mandatory or an optional E2E services. For example, if the E2E service is optional, it might be ignored that it is not available at the access network. However, if it is a mandatory E2E service, it may be searched for an alternative service or, if it is ignored, a confirmation may be acquired (e.g., from the user or the home provider), such that the UE 30 can still register other services via the access network 10.

In some examples, the processing circuitry 33 is further configured to execute a plurality of respective procedures to verify availability of a plurality of respective E2E service via the attached wireless network as the access network.

Based on such an assessment, a list of available an non-available E2E services (possibly also including alternative E2E services) may be generated. If only a part of the plurality of E2E services is available via the attached wireless network, the processing circuitry may be further configured to perform a partial E2E service registration via the attached wireless network. In other words, some E2E services may be registered and some may not.

In some examples, if at least two possible wireless networks are available as access networks, the processing circuitry 33 is further configured to attach to at least two possible networks. The UE 30 may attach to both at the same time or sequentially. For example, the UE 30 may attach to a first access network, and if not all E2E services are available, it may attach to a second access network (and possibly to further access networks), and then compare the E2E services that are available at the at least two networks.

In other words, in such examples, the processing circuitry 33 is further configured to execute the procedure at the at least two possible network and execute a predetermined action based on a result of the test procedures.

The predetermined action may comprise at least one of attaching to a further network, the selecting of one (or more) network(s) to register at least one E2E service, and the like.

The procedure carried out by the UE 30 may indicate (verify) availability of the at least one E2E service at the access network. In some examples, it may not be necessary to carry out the procedure each time a UE of a certain home network provider/operator attaches to an access network. For example, a home network may register availability (or non-availability) of the at least one E2E service and provide the information to other UEs.

In some examples, the processing circuitry 33 is further configured to determine quality of the E2E service via the access network. Based on the quality (e.g., QoS or other quality criteria, such as latency), the UE (or the user of the home network/operator) (or the processing circuitry 33) may prioritize one access network over another access network. For example, even if a first access network has more available E2E services than a second access network, but the quality of the available E2E services via the second access network is (at least for some relevant E2E services) higher. In such a case, the second access network might be preferred over the first access network.

In some examples, the processing circuitry is configured to prioritize an access network based on a configuration provided by the home network/operator. For example, the home network/operator may use network steering to configure the UE to prioritize an access network over another access network. Thereby, a cost efficient selection of the access network may be provided. The network steering may additionally or alternatively be based on a quality of service to be achieved via the access network.

Some examples pertain to a cellular home network comprising processing circuitry configured to maintain a database comprising data indicating, for at least one access network, whether at least one E2E service is available via the at least one access network. The processing circuitry of the home network is further configured to update the database based on a signal, by a user equipment, UE. The signal indicates a current availability of the E2E service via a wireless network as an access network.

The availability of the E2E service at the access network may change. For example, the service may be temporarily unavailable due to technical issues, or the access network may be updated to provide the E2E service. Thus, from time to time, the home network may need to re-evaluate whether the at least one E2E service is still (not) available at the access network.

A database may refer to an (organized) collection of data that is stored, managed, and accessed electronically. It may allow users and applications to retrieve, manipulate, and update information, e.g., based on a structured query language or other methods. However, the present disclosure is not limited to any type of database or any type of storage used to maintain the database.

For example, if the database indicates that no mandatory feature from the home operator/network or from the user is missing, any network could be selected and no active network search might need to be carried out by the UE since the UE may be aware of the services of the networks based on the data provided by the home operator/network. However, in case a (mandatory) feature is missing (or the quality is not good enough of the feature) and/or the user or home operator/network does not accept the missing feature (or a quality of an available feature is not good enough), a network search may be executed by the UE to find new networks that are not stored in the database (yet). Thereby, the UE may be aware about all networks in reach, and may update the database with new test result.

In some examples, the database further comprises data indicating the procedure, for the UE, to verify availability of the at least one E2E service via the wireless network.

In some examples, the database further comprises data indicating, if the E2E service is available via the at least one access network, a quality of the at least one E2E service. It might not be necessary to transmit such data in every case. In some examples, it may be sufficient to only transmit the data indicating availability or, if this is not known, data indicating the test procedure. However, in other examples, also the data indicating the quality are transmitted. In some examples, only the data indicating the quality is transmitted, which might implicitly indicate if or that the respective E2E service is available. In other words, the data indicating the quality may correspond to or include the data indicating the availability or the test procedure. For example, the test procedure may be successful, if at minimum quality is reached. As indicated above, a ranking or a preference of multiple access networks may be established based on the data indicating the quality.

The cellular home network may receive a report from the UE (and accordingly, the UE may be configured to generate such a report and send it to the cellular home network). The report may be associated with a network ID of the access network to set up the database (thereby enhancing future attach procedures, as discussed above). For example, if the latest report was generated less than a predetermined time ago (e.g. not than one day or any other configurable time period), the procedure may be skipped and locally cached or central reports may be used to provide information of availability to the UE. Thereby, power consumption may be reduced and speed of network selection/reselection may be increased. Device or service specific report details missing in a cached or central report may be added or updated by the requesting device.

Also, the access network or the home network may provide pricing information to the user (e.g., costs per Megabyte, costs per message, costs per minute of a call, and the like).

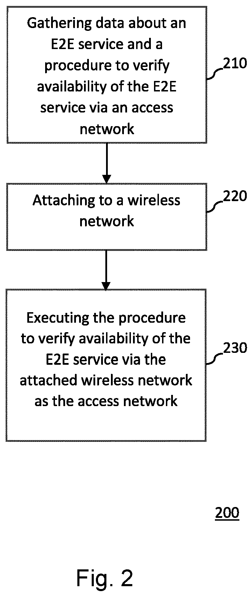

Fig. 2 depicts a method 200 for a UE (such as the UE 30). The method 200 comprises gathering, 210, data about an E2E service and a procedure to verify availability of the E2E service via an access network. The method 200 further comprises attaching, 220, to a wireless network. The method 200 further comprises executing, 230, the procedure to verify availability of the E2E service via the attached wireless network as the access network.

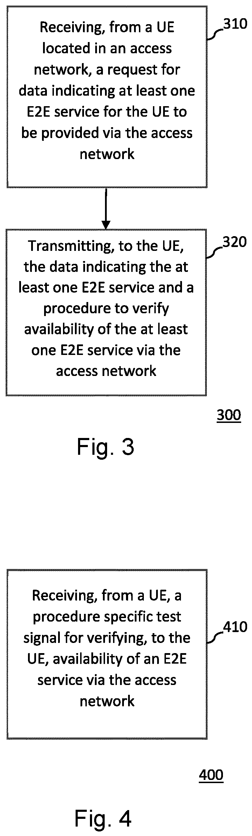

Fig. 3 depicts a method 300 for a wireless home network. The method 300 comprises receiving, 310, from a UE located in an access network different from the home network, a request for data indicating at least one E2E service for the UE to be provided via the access network. The method 300 further comprises transmitting, 320, to the UE, the data indicating the at least one E2E service and a procedure to verify availability of the at least one E2E service via the access network.

Fig. 4 depicts a method 400 for an access network. The method 400 comprises receiving, 410, from a UE, a procedure specific test signal for verifying, to the UE, availability of an E2E service via the access network.

In the following, a method according to the present disclosure is briefly described whose steps may be at least partially combined with other method steps discussed herein:
1) There may be many ways to setup new UE configurations by the home network operator (e.g., OTA, SIM updates, URSP, NAS based, or the like). This may enable the home operator to send the SLA verification list including the E2E scenarios (data services, SMS, voice, loT, and the like) and priorities. Optional, there may be additionally a User/UE validation list.
2) When connected to a network, the UE may start the verification process immediately and check which of the listed services are supported.
3) After this verification process and based on the provisioned rules, the UE may decide to use the network or to use the result to re-define network usage without limitation of network types and access types, such as:
   - Local networks (e.g. Wi-Fi, Bluetooth, NFC)
   - Public networks (e.g. 3GPP PLMNs with 2G, 3G, 4G, 5G, 6G and loT Standards e.g. NB, CAT-M ... )
   - Private networks (NPNs, SNPNs)
   - NTN (i.e. non-terrestrial like HAPS and Satellite).
4) Reporting the results to the home network and triggering, by the home network, actions depending on SLAs, billing data (e.g., reconfiguration of the UE, trigger reselection of network, network steering), or the like, e.g., to optimize costs for the user and the operator.
5) Reporting results to user
6) Setting on specific rules, e.g., verified networks on allowed/preferred/forbidden list. It should be noted that the rules may change.
7) Allow user to trigger network selection also in case of reporting limitations (overwrite)

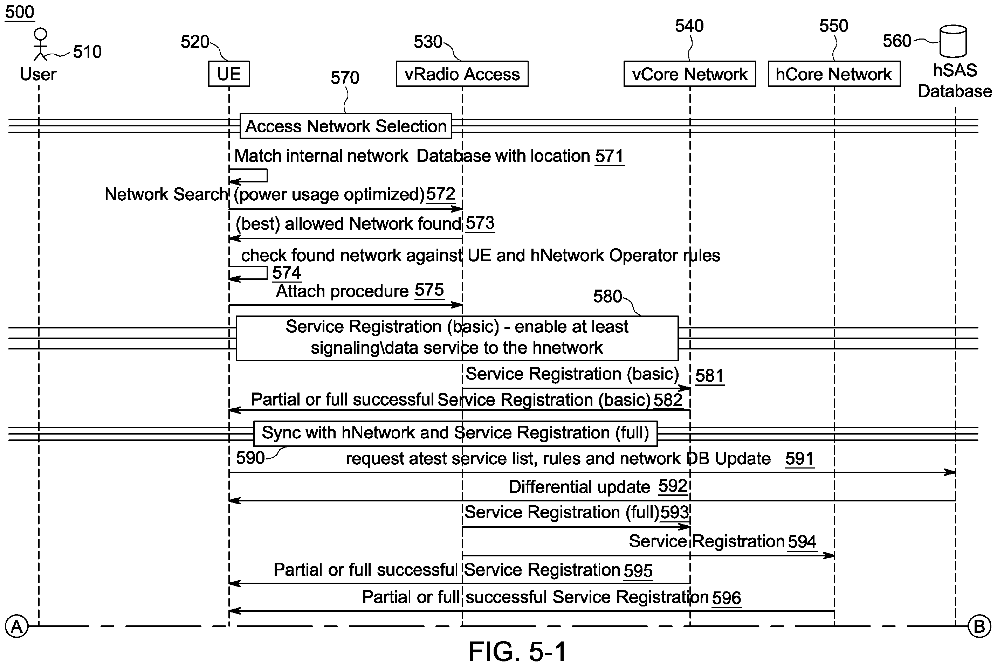

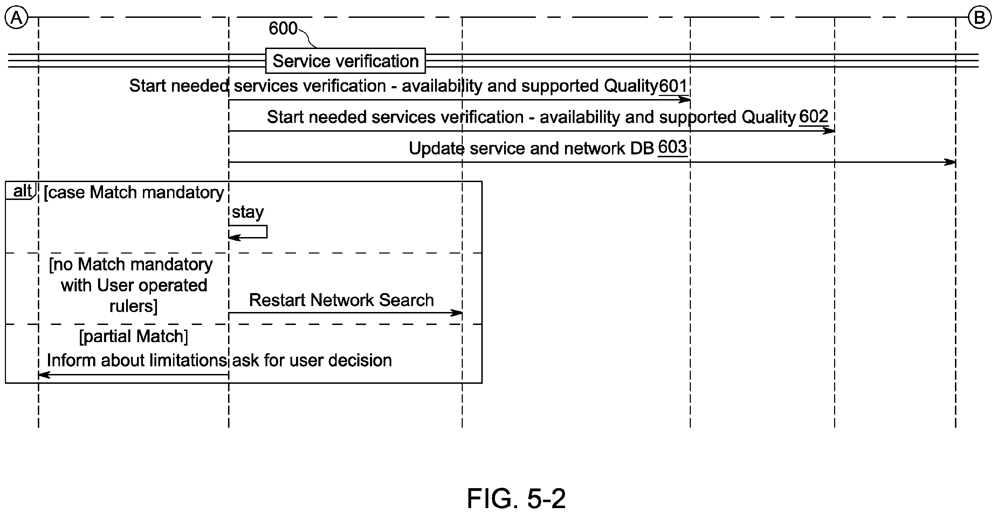

Fig. 5 depicts a sequence diagram of a method 500 according to the present disclosure. In the sequence diagram, different entities are depicted that participate at the method 500, i.e., a user 510, a UE 520, a visited radio (vRadio) access entity 530, a vCore Network 540 (as access network), a home core (hCore) network 550, and a hSAS (home service level assurance system) database 560. It should be noted that herein, a prefix v is short for "visited" and h is short for "home".

The method is divided into several sub-methods which may run independently of each other and each of which may be optional. Also each method step shall be considered as optional.

A first sub-method 570 pertains to the selection of a wireless network as an access network. At 571, the UE 520 matches an internal network database with its location. The UE 520 carries out a corresponding network search, 572, to the vRadio access entity 530. The vRadio access entity 530 transmits, 573, the (best) allowed networks to the UE 520 and the UE 520 checks, 574, the found networks against UE and home operator rules.

A second sub-method 580 pertains to a service registration with the access network. The method 580 include a service registration (basic) 581 via the vCore network 540 by the vRadio access entity 530. The vCore network 540 reports, 582, partial or full successful service registration (basic) to the UE 520.

A third sub-method 590 pertains to synchronization and full service registration with the home network 550. The UE 520 requests, at the hSAS database 560, a latest service list, rules and a network database update, and the hSAS database 560 provides, 592, a differential update to the UE 520. The vRadio access entity 530 carries, out a (full) service registration at the vCore network 540, at 593, and at the hCore network 550, at 594. The vCore network 540 responds, 595, to the UE 520, with a message indicating partial or full successful service registration. The hCore network 550 also responds, 596, to the UE 520, with a message indicating partial or full successful service registration.

A fourth sub-method 600 pertains to a service verification. The UE 520 carries out a procedure, 601, to verify availability of services (and optionally supported quality) at the vCore network 540, such as data services, or any other E2E service discussed herein. The UE 520 further carries out a procedure, 602, to verify availability of services (and optionally supported quality) at the hCore network 550, such as IMS (IP multimedia subsystem), if S8HR (S8 home routed) is used, without limiting the present disclosure in that regard. Depending on the available services via the vCore network 540, the UE 520 updates, 603, the hSAS database 560.

Optionally, the network search may be restarted, if not the right services or no sufficient services are available. If limitations (e.g., other services than required) are present, the user 510 may be informed accordingly.

In the following, a further method is briefly described whose method steps may all be considered as optional and which may be taken in isolation and be combined with other method steps described herein.
1) The UE may be provisioned with SLA service (mandatory) and SLA network (optional; e.g., based on legacy network selection) tables, such as:
   - Static configuration
   - OTA update from Home Network (serving the USIM/subscription)
   - (New) URSPs rules from Home Network (serving the USIM/subscription)
   - Application layer based

The SLA service table may have one or more of the following entries:
- service/I D,
- test procedure (e.g. service auth/registration, service establishment, data transfer, voice test call...)
- service expectation (i.e. mandatory, optional).
- service state (i.e. successful/failed)

The SLA network table entries may have a priority, such as:
- Network RAT technology (e.g. 5GPP 4G, 5G, NPN, SNPN, Wifi, fixed, ...
- Authentication/credentials (optional,)
- PLMN ID (for 3GPP networks only)
- state of services (in first or network initiated update the expected working services)

2) Because of the SLA tables, the UE may switch into an "SLA network selection modus"
3) The UE may trigger network selection based on SLA network table priority without considering any indication of service support (e.g., data services must be supported)
4) Registration to Network/PLMN
5) Establishing "default" data session
6) UE performs for each SLA service entry in table the related test procedures
7) UE stores the related result state of services for the networks tested - e.g. updates the SLA network table.
8) UE continues with 2) and test the other available networks in priority order.
9) UE selects the network where most mandatory and as many as possible optional services are supported.
10) Optionally, the UE reports the result back to the home network
11) Optionally, the UE can offer and display available services to the user via MMI.

According to the present disclosure, at least one of the following effects may be achieved:
- The home network operator may be allowed to trigger, after successful network connection, a UE based verification procedure
- The home operator may control and reuse existing procedures to setup the UE with needed information to run SLA verification process (e.g., OTA, SIM, OTT, URSP)
- SLA verification results may reflect realistic E2E scenario
- Online billing information may be collected to get a realistic cost information. For example, costs from an operator viewpoint may be optimized based on roaming steering (e.g., prioritization of network selection according to costs or cost effectiveness of the collected data). Also, cost information may be available to use to better approximate costs for the user, if possible. Furthermore, cost verification may be carried out based on confirming the SLA.
- Analyze and compare with business SLA agreement. For example, the (measured) data may be checked for plausibility based on the SLA.
- vPLMN and intermediate network(s), e.g., for transport to the hPLMN, can be verified
- No limitation of network types and access types
- The UE may be steered to the best available network based on results and policies (policies may be set by the home operator and/or by the user)
- User expectation may be fulfilled and their experience may be optimized

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A user equipment, UE (30; 520), comprising processing circuitry (33) configured to:
gather data about at least one end-to-end, E2E, service and a procedure to verify availability of the E2E service via an access network;
attach to a wireless network (10; 540); and
execute the procedure to verify availability of the at least one E2E service via the attached wireless network (10; 540) as the access network.

2. The UE (30; 520) of claim 1, wherein the processing circuitry (33) is further configured to:
send a procedure specific test signal to the attached wireless network (10; 540) for verifying the availability of the at least one E2E service via the attached wireless network (10; 540).

3. The UE (30; 520) of claim 1 or 2, wherein, if the at least one E2E service is not available, the processing circuitry (33) is further configured to:
gather data about at least one alternative E2E service; and
execute a procedure to verify the availability of the at least one alternative E2E service via the attached wireless network (10; 540).

4. The UE (30; 520) of claim 3, wherein, if the at least one alternative E2E service is available, the processing circuitry (33) is further configured to:
generate a signal to acquire a user input to register the UE (30; 520) for the at least one alternative E2E service at the attached wireless network (10; 540).

5. The UE (30; 520) of any one of claims 1 to 4, wherein the data comprises an indication of whether the at least one of E2E service is a mandatory or an optional E2E services.

6. The UE (30; 520) of any one of claims 1 to 5, wherein the circuitry (33) is further configured to:
execute a plurality of respective procedures to verify availability of a plurality of respective E2E service via the attached wireless network (10; 540) as the access network.

7. The UE (30; 520) of claim 6, wherein, if only a part of the plurality of E2E services is available via the attached wireless network (10; 540), the processing circuitry (33) is further configured to:
perform a partial E2E service registration via the attached wireless network (10; 540).

8. The UE (30; 520) of any one of claims 5 to 7, wherein the gathering of the data comprises at least one of receiving the data from a home network (550), or reading the data from at least one of a storage of the UE (30; 520) and a storage coupled with the UE (30; 520).

9. The UE (30; 520) of any one of claims 1 to 8, wherein, if at least two possible wireless networks (10; 540) are available as access networks, the processing circuitry (33) is further configured to:
attach to the at least two possible networks (10; 540);
execute the procedure at the at least two possible networks (10; 540); and
execute a predetermined action based on a result of the test procedures.

10. The UE of any one of claims 1 to 9 wherein the processing circuitry (33) is further configured to:
determine quality of the E2E service via the access network.

11. A cellular home network (550) comprising processing circuitry configured to:
maintain a database (560) comprising data indicating, for at least one access network, whether at least one E2E service is available via the at least one access network; and
update the database based on a signal, by a user equipment, UE (30; 520), wherein the signal indicates a current availability of the E2E service via a wireless network (10; 540) as an access network.

12. The cellular home network (550) of claim 11, wherein the database (560) further comprises data indicating a procedure, for the UE (30; 520), to verify availability of the at least one E2E service via the wireless network (10; 540).

13. The cellular home network (550) of claim 11 or 12, wherein the database further comprises data indicating, if the E2E service is available via the at least one access network, a quality of the at least one E2E service.

14. An access network (10; 540) comprising processing circuitry (23) configured to:
receive, from a user equipment, UE (30; 520), a procedure specific test signal for verifying, to the UE (30; 520), availability of an E2E service via the access network (10; 540).

15. A communication system comprising:
a UE (30; 520) according to any one of claims 1 to 10;
a cellular home network (550) according to any one of claims 11 to 13; and
an access network (10; 540) according to claim 14.

## Amended claims

### Amended claims in accordance with Rule 137(2) EPC.

1. A user equipment, UE (30; 520), comprising processing circuitry (33) configured to:
gather data about a plurality of end-to-end, E2E, services and a plurality of respective procedures to verify availability of the plurality of E2E services via an access network;
attach to a wireless network (10; 540);
execute the plurality of procedures to verify availability of the plurality of E2E services via the attached wireless network (10; 540) as the access network; and
if only a part of the plurality of E2E services is available via the attached wireless network (10; 540), register for the subset of E2E services that are available via the attached wireless network (10; 540).

2. The UE (30; 520) of claim 1, wherein the processing circuitry (33) is further configured to:
send a procedure specific test signal to the attached wireless network (10; 540) for verifying the availability of the plurality of E2E services via the attached wireless network (10; 540).

3. The UE (30; 520) of claim 1 or 2, wherein, if one of the plurality of E2E services is not available, the processing circuitry (33) is further configured to:
gather data about at least one alternative E2E service; and
execute a procedure to verify the availability of the at least one alternative E2E service via the attached wireless network (10; 540).

4. The UE (30; 520) of claim 3, wherein, if the at least one alternative E2E service is available, the processing circuitry (33) is further configured to:
generate a signal to acquire a user input to register the UE (30; 520) for the at least one alternative E2E service at the attached wireless network (10; 540).

5. The UE (30; 520) of any one of claims 1 to 4, wherein the data comprises an indication of whether the plurality of E2E services are mandatory or optional E2E services.

6. The UE (30; 520) of any one of claims 1 to 5, wherein the gathering of the data comprises at least one of receiving the data from a home network (550), or reading the data from at least one of a storage of the UE (30; 520) and a storage coupled with the UE (30; 520).

7. The UE (30; 520) of any one of claims 1 to 6, wherein, if at least two possible wireless networks (10; 540) are available as access networks, the processing circuitry (33) is further configured to:
attach to the at least two possible networks (10; 540);
execute the plurality of procedures at the at least two possible networks (10; 540); and
based on a result of the procedures, attach to a further network or select one or more of the at least two possible networks (10; 540) to register the plurality of E2E services.

8. The UE of any one of claims 1 to 7, wherein the processing circuitry (33) is further configured to:
determine quality of the plurality of E2E services via the access network.

9. A method (200) for a user equipment, UE, the method (200) comprising:
gathering (210) data about a plurality of end-to-end, E2E, services and a plurality of respective procedures to verify availability of the plurality of E2E services via an access network;
attaching (220) to a wireless network (10; 540);
executing (230) the plurality of procedures to verify availability of the plurality of E2E services via the attached wireless network (10; 540) as the access network; and
if only a part of the plurality of E2E services is available via the attached wireless network (10; 540), registering for the subset of E2E services that are available via the attached wireless network (10; 540).

10. A computer program comprising instructions which, when the computer program is carried out on a user equipment, UE, causes the UE to carry out the method of claim 9.

11. A non-transitory machine-readable medium comprising machine-readable instructions which, when executed on a user equipment, UE, the UE to carry out the method of claim 9.

12. A communication system comprising:
a UE (30; 520) according to any one of claims 1 to 8;
a cellular home network (550) comprising processing circuitry configured to:
maintain a database (560) comprising data indicating, for at least the attached access network, whether the plurality of E2E services are available via the attached access network; and
update the database based on a signal, by the user equipment, UE (30; 520), wherein the signal indicates a current availability of the plurality of E2E services via the attached wireless network (10; 540); and
the access network (10; 540).

13. The communication system of claim 12, wherein the database (560) further comprises the data indicating the plurality of procedures to verify availability of the plurality of E2E services.

14. The communication system of claim 12 or 13, wherein the database further comprises data indicating, if a respective one of the plurality of E2E services is available via the at least one access network, a quality of the respective E2E service.
